# EUROPÄISCHE PATENTANMELDUNG

(11) **EP 3 336 202 A1**
(43) Veröffentlichungstag der Anmeldung: **20.06.2018**
(21) Anmeldenummer: 16203590.1
(22) Anmeldetag: 13.12.2016
(51) Int. Cl.: C14C 9/00, C08F 2/06, C08F 220/12, C14C 3/06, C14C 3/10, C14C 3/18, C14C 3/22, C14C 3/28, C08F 220/18

(54) **VERFAHREN ZUR HERSTELLUNG HYDROPHOBIERENDER LEDERBEHANDLUNGSMITTEL**

(71) Anmelder: LANXESS Deutschland GmbH, 50569 Köln (DE)
(72) Erfinder: GROSCH, Rafael, 50933 Köln (DE); REINERS, Juergen, 51373 Leverkusen (DE); JANSEN, Bernhard, 51061 Köln (DE); BOROWSKI, Uwe, 51063 Köln (DE); KASTER, Günter, 51373 Leverkusen (DE)

(57) **Zusammenfassung**

Verfahren zur Herstellung hydrophobierender Lederbehandlungsmittel, enthaltend die Schritte
a) radikalisch initiierte Copolymerisation
i) mindestens einer ethylenisch ungesättigten Carbonsäure oder deren Derivaten, und
ii) mindestens eines (Meth)acrylats eines primären, gesättigten C₈- bis C₂₂-Alkohols,

b) Mischen des nach Schritt a) erhaltenen Reaktionsgemisches mit Wasser,
c) Versalzung zumindest eines Teils der Carboxylgruppen des nach Schritt b) erhaltenen Reaktionsgemisches mit einer Base, und
d) Scherung des nach Schritt c) erhaltenen Reaktionsgemisches auf eine mittlere Teilchengröße von 0,05 - 10 µm,
wobei Schritt a) in Öl als Reaktionsmedium durchgeführt wird und wobei die Atmosphäre in Schritt a) weniger als 0,1 Vol.-% eines oxidierenden Gases enthält.

## Beschreibung

Die vorliegende Erfindung betrifft ein Verfahren zur Herstellung von hydrophobierenden Lederbehandlungsmitteln, das nach dem Verfahren hervorgebrachte hydrophobierende Lederbehandlungsmittel und wässrige Dispersionen sowie ihre Verwendung in Verfahren zur Gerbung von Leder sowie die danach erhaltenen Leder.

Hydrophobierende Lederbehandlungsmittel enthalten Copolymerisate, die aus hydrophoben und hydrophilen Monomerkomponenten bestehen. Der hydrophile Teil bewirkt eine Wasseremulgierbarkeit, der hydrophobe Teil bewirkt die fettende und hydrophobierende Wirkung der Copolymerisate. Hydrophobierende Lederbehandlungsmittel haben in der Nachgerbung fettende, füllende und hydrophobierende Eigenschaften.

Der Stand der Technik sieht in Verfahren zur Herstellung von hydrophobierenden Lederbehandlungsmitteln zum einen die Verwendung von organischen Lösungsmitteln vor, und ergänzend oder alternativ werden häufig Emulgatoren in den Verfahren eingesetzt, wenn das Verfahren als Emulsionspolymerisation durchgeführt wird.

US 5 316 860A beschreibt amphiphile Copolymere zur Lederbehandlung, die durch radikalische Polymerisation von Acrylsäure und Methacrylaten langkettiger Fettalkohole in wassermischbaren Lösungsmitteln wie tert-Butanol oder Ethylenglycolmonobutylether hergestellt werden. Wenn die eingesetzten Lösungsmittel nicht destillativ abgetrennt werden, verbleiben diese im Endprodukt, welches dann zum Hydrophobieren von gegerbtem Leder verwendet wird.

EP 0 757 108A2 beschreibt ein Verfahren zur Lederhydrophobierung mittels wäßriger Dispersionen aus amphiphilen Copolymeren und Siliconölen. Das dargestellte amphiphile Copolymer ist weitestgehend identisch mit dem Copolymer aus US 5 316 860A; es werden die darin offenbarten Lösungsmittel verwendet.

EP 1 087 021A1 offenbart Lederbehandlungsmittel zum Hydrophobieren, Nachgerben und Fetten von Leder, bestehend aus einem carboxyl- oder anhydridfunktionellen Polysiloxan, einem amphiphilen Copolymer, einem Emulgator und einem Öl oder Wachs. Die hergestellten Leder weisen in einigen Fällen diffusionsbedingte Inhomogenitäten in der Fettverteilung und dadurch eine unruhige Färbung auf. Außerdem weisen einige der hergestellten Leder eine Tendenz zur Losnarbigkeit bzw. Doppelhäutigkeit auf.

EP 1 342 797A1 offenbart wäßrige Dispersionen, die als Lederbehandlungsmittel beim Fettlickereinsatz verwendet werden. Die hierbei verwendeten amphiphilen Polymere werden zusammen mit einem stabilisierenden Emulgator verwendet und in einem Hochdruckpolymerisationsprozess hergestellt, bei dem auch Lösungsmittel verwendet werden können.

In WO 2009/030697A1 sind ebenfalls amphiphile Polymere für die Lederbehandlung beschrieben. Es handelt sich um Präparate, die in der Vor-, Haupt- und Nachgerbung eingesetzt werden und gerbende, nachgerbende, hydrophobierende, fettende und dispergierende Wirkung besitzen. Sie werden hergestellt durch Emulsionspolymerisation unter Verwendung von Emulgatoren.

Die Verfahren des Standes der Technik sowie die dadurch hervorgebrachten hydrophobierenden Lederbehandlungsmittel weisen jedoch Nachteile auf.

Die in vielen Verfahren eingesetzten organischen Lösungsmittel sind umweltschädlich und stellen eine vermeidbare Abwasserbelastung dar. Leicht flüchtige organische Verbindungen (Volatile Organic Compounds, VOC) unterliegen zudem strengen Bestimmungen zum Schutz von Mensch und Umwelt. Einige organische Lösungsmittel sind zudem entzündlich und/oder gesundheitsschädigend und sind vermeidbare Risiken im Umgang mit den Produkten, die sie enthalten, abgesehen von der Notwendigkeit zur Kennzeichnung eines solchen Gemisches als Gefahrstoff. Wenn die organischen Lösungsmittel nach Herstellung des hydrophobierenden Lederbehandlungsmittels nicht entfernt werden, verbleiben sie in letzterem und können negative Auswirkungen auf das Leder in der Nachgerbung haben.

Die destillative Entfernung von organischen Lösungsmitteln ist aufwendig und erfordert zusätzliche, zeitaufwendige Prozeßschritte sowie Kosten, unter anderem für die hierzu erforderliche Energie.

Die zur Emulsionspolymerisation erforderlichen Emulgatoren machen sich üblicherweise bei der Verwendung des Lederbehandlungsmittels als hydrophobierendes Mittel durch ihren hydrophilen Anteil störend bemerkbar und können die hydrophoben Eigenschaften des fertigen Leders verschlechtern.

Darüber hinaus führen viele hydrophobierende Lederbehandlungsmittel des Standes der Technik zu Ledern mit fleckigem Aussehen, unangenehmem Griff oder Losnarbigkeit, also Eigenschaften, die unerwünscht bzw. nicht tolerierbar sind.

Es war daher die Aufgabe der Erfindung, ein Verfahren zur Herstellung eines hydrophobierenden Lederbehandlungsmittels zur Verfügung zu stellen, das die oben genannten Nachteile vermeidet und damit umweltfreundlicher und weniger aufwendig ist.

Weiter war es eine Aufgabe der Erfindung, ein Verfahren zur Herstellung eines hydrophobierenden Lederbehandlungsmittels bereitzustellen, welches bevorzugt ein hydrophobierendes Lederbehandlungsmittel hervorbringt, das ohne weitere Umsetzungen direkt in der Nachgerbung von Leder verwendbar ist und besonders bevorzugt zu Ledern führt, die sich durch eine hohe Wasserbeständigkeit auszeichnen, ganz besonders bevorzugt durch einen MAESER-Wert von größer als 15.000 und eine statistische Wasseraufnahme von weniger als 35%, besonders bevorzugt von weniger als 30%, bevorzugt gemessen nach ASTM D-2099-70.

Weiter sollte das nach dem erfindungsgemäßen Verfahren hervorgebrachte hydrophobierende Lederbehandlungsmittel bevorzugt vorteilhaft in der Nachgerbung verwendbar sein in Bezug auf Gerbwirkung, Griff und Fülle. Auch sollten bevorzugt weder die Färb- und Zurichtbarkeit des hergestellten Leders noch das Aussehen des Leders negativ beeinträchtigt werden.

Es wurde überraschend gefunden, dass die oben beschriebenen Nachteile der Verfahren des Standes der Technik überwunden werden konnten durch ein Verfahren zur Herstellung hydrophobierender Lederbehandlungsmittel, enthaltend die Schritte
a) radikalisch initiierte Copolymerisation
   i) mindestens einer ethylenisch ungesättigten Carbonsäure oder deren Derivaten, und
   ii) mindestens eines (Meth)acrylats eines primären, gesättigten C₈- bis C₂₂-Alkohols,
b) Mischen des nach Schritt a) erhaltenen Reaktionsgemisches mit Wasser,
c) Versalzung zumindest eines Teils der Carboxylgruppen des nach Schritt b) erhaltenen Reaktionsgemisches mit einer Base, und
d) Scherung des nach Schritt c) erhaltenen Reaktionsgemisches auf eine mittlere Teilchengröße von 0,05 - 10 µm,
wobei Schritt a) in Öl als Reaktionsmedium durchgeführt wird und wobei die Atmosphäre in Schritt a) weniger als 0,1 Vol.-% eines oxidierenden Gases enthält.

### Schritt a)

### Komponente i)

Die mindestens eine ethylenisch ungesättigte Carbonsäure oder deren Derivate der Komponente i) ist bevorzugt ausgewählt aus der Gruppe bestehend aus Acrylsäure, Methacrylsäure, Itaconsäure, Fumarsäure und Maleinsäure sowie deren Derivaten, bevorzugt Anhydriden, besonders bevorzugt Maleinsäureanhydrid, und Alkali-Salzen, bevorzugt Natriumacrylat, und deren Gemischen.

Die mindestens eine ethylenisch ungesättigte Carbonsäure oder deren Derivate der Komponente i) ist besonders bevorzugt ausgewählt aus der Gruppe bestehend aus Acrylsäure und Methacrylsäure, ganz besonders bevorzugt Acrylsäure.

Bevorzugt ist die mindestens eine ethylenisch ungesättigte Carbonsäure oder deren Derivate der Komponente i) von der Komponente ii), dem Aktivator, dem Kettenübertragungsmittel, der Base, dem Öl, den sonstigen Zusatzstoffen und dem Wasser verschieden.

### Komponente ii)

Das mindestens eine (Meth)acrylat eines primären, gesättigten C₈- bis C₂₂-Alkohols der Komponente ii) ist bevorzugt ausgewählt aus der Gruppe bestehend aus Estern von Acrylsäure oder Methacrylsäure mit Fettalkoholen, die durch die Hydrierung von Fettsäuren, durch Hydroformylierung von alpha-Olefinen und anschließende Hydrierung zum Alkohol oder durch die Alfolsynthese bereitgestellt werden können.

Das mindestens eine (Meth)acrylat eines primären, gesättigten C₈- bis C₂₂-Alkohols der Komponente ii) ist besonders bevorzugt ausgewählt aus der Gruppe bestehend aus Octylacrylat, Octylmethacrylat, 2-Ethylhexylacrylat, 2-Ethylhexylmethacrylat, Methacrylsäureester aus hydriertem Talgfettalkohol, Acrylsäureester aus hydriertem Talgfettalkohol, Stearylmethacrylat, Stearylacrylat, Hexadecylacrylat, Hexadecylmethacrylat, Dodecylacrylat, Dodecylmethacrylat, Eicosanylacrylat, Eicosanylmethacrylat, Docosanylmethacrylat und Docosanylacrylat und deren Gemischen, ganz besonders bevorzugt aus der Gruppe bestehend aus Hexadecylacrylat, Stearylmethacrylat und deren Gemischen.

Die Methacrylsäure- bzw. Acrylsäureester der oben beschriebenen Alkohole kommen häufig als technische Gemische der Reaktionsprodukte von Alkoholen unterschiedlicher Kettenlänge in den Handel. Sie können als solche verwendet werden.

Besonders bevorzugt ist die Komponente ii) mindestens ein (Meth)acrylat eines primären, gesättigten C₁₂-C₂₂-Alkohols, ganz besonders bevorzugt eines primären, geradkettigen, gesättigten C₁₂-C₂₂-Alkohols.

Bevorzugt ist das mindestens eine (Meth)acrylat eines primären, gesättigten C₈- bis C₂₂-Alkohols der Komponente ii) von der Komponente i), dem Aktivator, dem Kettenübertragungsmittel, der Base, dem Öl, den sonstigen Zusatzstoffen und dem Wasser verschieden.

### Aktivator:

Bevorzugt wird die Copolymerisation initiiert von mindestens einem Aktivator. Als mindestens ein Aktivator für die in Schritt a) erfolgende radikalisch initiierte Copolymerisation können Radikalbildner fungieren wie beispielsweise Peroxide, Perester und Azoverbindungen.

Bevorzugt ist der mindestens eine Aktivator ausgewählt aus der Gruppe bestehend aus Tertiärbutylhydroperoxid, Ditertiärbutylperoxid, Dibenzoylperoxid, Bernsteinsäureperoxid, Cumolhydroperoxid, Tertiärbutylperbenzoat, 2,2-Azobis(-2-methyl)butyronitril, 2,2-Azobisisobutyronitril und Gemischen davon, besonders bevorzugt bestehend aus Ditertiärbutylperoxid, 2,2-Azobis(-2-methyl)butyronitril und Gemischen davon.

Bevorzugt ist der Aktivator von den Komponenten i) und ii), dem Kettenübertragungsmittel, der Base, dem Öl, den sonstigen Zusatzstoffen und dem Wasser verschieden.

### Öl:

Der Schritt a) wird in Öl als Reaktionsmedium durchgeführt.

Unter dem Begriff "Öl" wird im Rahmen der vorliegenden Anmeldung eine organische Flüssigkeit verstanden, die sich bei 20 °C zu weniger als 1 mol/L, bevorzugt zu weniger als 0,5 mol/L, ganz besonders bevorzugt zu weniger als 0,1 mol/L in Wasser löst.

Das Öl ist bevorzugt ausgewählt aus der Gruppe bestehend aus synthetischen Ölen, natürlichen Ölen und Gemischen davon.

Synthetische Öle sind bevorzugt ausgewählt aus der Gruppe bestehend aus Mineralölen und Paraffinölen.

Als Paraffinöle können flüssige, halbfeste oder feste Paraffingemische oder Gemische daraus eingesetzt werden. Paraffinöle werden bevorzugt aus Erdöldestillationsschritten gewonnen. Paraffinöle können auch nach dem Fischer-Tropsch-Verfahren oder nach dem "gas-to-liquid"-Prozeß (GTL-Prozeß) gewonnen sein.

Ein besonders bevorzugtes Paraffinöl ist Weißöl. Besonders bevorzugt wird in Schritt a) Weißöl als Öl eingesetzt. Ganz besonders bevorzugt wird Weißöl 285 in Schritt a) eingesetzt.

Unter dem Begriff "Weißöl" wird im Rahmen der vorliegenden Anmeldung ein über 280°C siedendes Eröldestillat verstanden. Bevorzugt ist das Weißöl farblos und geruchlos.

Weißöl wird im Allgemeinen auch als Paraffinum liquidum bezeichnet. Dünnviskose Typen des Weißöls haben die Bezeichnung Paraffinum perliquidum.

Natürliche Öle sind bevorzugt ausgewählt aus der Gruppe bestehend aus Rapsöl, Leinöl, Sonnenblumenöl, Distelöl, Olivenöl, Ricinusöl, Tran, Lebertran, Fischöl, Knochenöl, Lecithin und Gemischen davon.

Es können auch hydrierte oder nur teilweise hydrierte Formen der genannten natürlichen Öle in Schritt a) eingesetzt werden, bevorzugt hydriertes Ricinusöl.

Das in Schritt a) eingesetzte Öl ist bevorzugt geruchs- und geschmacksfrei und enthält auf Grund von Hydrierprozessen keine Aromaten und keine Schwefelverbindungen.

Weitere Beispiele für das in Schritt a) eingesetzte Öl sind Polyethylenwachse, auch in oxidierter Form, Polyisobutylenwachse, Montanwachse, Bienen- und Carnaubawachse.

Bevorzugt sind die in Schritt a) eingesetzten Öle geruchsarm, farblos sowie aromatenfrei.

Bevorzugt ist das Öl von den Komponenten i) und ii), dem Aktivator, dem Kettenübertragungsmittel, der Base, den sonstigen Zusatzstoffen und dem Wasser verschieden.

### Kettenübertragungsmittel:

In Schritt a) kann auch mindestens ein Kettenübertragungsmittel eingesetzt werden, um das Molekulargewicht zu kontrollieren.

Das mindestens eine Kettenübertragungsmittel ist bevorzugt ausgewählt aus der Gruppe bestehend aus Alkylmercaptanen, Thioglykolsäureestern, Phenolen, ungesättigten Verbindungen, bevorzugt Ölsäure, niederen Alkoholen, bevorzugt n-Butanol und tert-Butanol, und Aldehyden.

Das mindestens eine Kettenübertragungsmittel wird bei der Copolymerisation bevorzugt verbraucht und ist folglich nicht mehr im Endprodukt enthalten.

Bevorzugt ist das Kettenübertragungsmittel von den Komponenten i) und ii), dem Aktivator, dem Öl, der Base, den sonstigen Zusatzstoffen und dem Wasser verschieden.

### Copolymerisation

Die Copolymerisation wird üblicherweise bei Temperaturen von 60°C bis 160 °C durchgeführt, bevorzugt bei 85°C bis 150 °C.

Die Atmosphäre in Schritt a) enthält weniger als 0,1 Vol.-% eines oxidierenden Gases, wobei das oxidierende Gas bevorzugt Sauerstoff ist.

Bevorzugt enthält die Atmosphäre in Schritt a) weniger als 0,01 Vol.-% eines oxidierenden Gases.

Besonders bevorzugt ist die Atmosphäre in Schritt a) enthaltend weniger als 0,1 Vol.-%, bevorzugt weniger als 0,01 Vol.-%, eines oxidierenden Gases Inertgasatmosphäre.

Bevorzugt besteht die Inertgasatmosphäre zu wenigstens 90 Vol.-%, bevorzugt zu wenigstens 95 Vol.-%, ganz besonders bevorzugt zu wenigstens 99 Vol.-%, ganz ganz besonders bevorzugt zu wenigstens 99,5 Vol.% aus einem oder mehreren Gasen ausgewählt aus der Gruppe bestehend aus Edelgasen, insbesondere aus Helium und Argon, Stickstoff und Kohlendioxid, bevorzugt ausgewählt aus der Gruppe bestehend aus Stickstoff und Kohlendioxid, ganz besonders bevorzugt Stickstoff.

Der Durchschnittsfachmann verfügt über die zur Durchführung des Prozesses erforderlichen Kenntnisse und Fähigkeiten.

Die Copolymerisation kann folgendermaßen durchgeführt werden:

Die mindestens eine ethylenisch ungesättigte Carbonsäure oder deren Derivate der Komponente i) wird mit dem mindestens einen (Meth)acrylat eines primären, gesättigten C₈- bis C₂₂-Alkohols der Komponente ii) in einem Öl als Reaktionsmedium in Gegenwart des Aktivators und gegebenenfalls eines Kettenübertragungsmittels polymerisiert.

In einer bevorzugten Ausführungsform wird in Schritt a) zunächst ein Teil des Öls vorgelegt, bevorzugt 70-90 Gew.-% der Gesamtmenge des in Schritt a) eingesetzten Öls, und im Anschluß die Monomere i) und ii) sowie der Aktivator, gelöst in Öl, bevorzugt in 10-30 Gew.-% der Gesamtmenge des in Schritt a) eingesetzten Öls, und gegebenenfalls ein Kettenübertragungsmittel zugefügt und die Polymerisation durchgeführt.

In einer weiteren bevorzugten Ausführungsform wird in Schritt a) zunächst ein Teil des Öls vorgelegt, bevorzugt 15-25 Gew.-% der Gesamtmenge des in Schritt a) eingesetzten Öls, und im Anschluß die Monomere i) und ii) sowie der Aktivator, gelöst in Öl, bevorzugt in 1-6 Gew.-% der Gesamtmenge des in Schritt a) eingesetzten Öls, und gegebenenfalls ein Kettenübertragungsmittel zugefügt und die Polymerisation durchgeführt. Nach Ende der Polymerisation wird das restliche Öl zugegeben, bevorzugt 69-84 Gew.-% der Gesamtmenge des in Schritt a) eingesetzten Öls.

Weiterhin ist bevorzugt, zunächst einen Teil der Monomermischung enthaltend die Monomere i) und ii) sowie gegebenenfalls ein Kettenübertragungsmittel als Gemisch zuzugeben, und im Anschluß den Rest der Monomermischung sowie den Aktivator, gelöst Öl, zuzufügen. In Bezug auf die bevorzugten Mengenangaben betreffend das Öl gelten die in den obigen bevorzugten Ausführungsformen gemachten Mengenangaben.

### Schritt b)

Das nach Schritt a) erhaltene Reaktionsgemisch wird, wenn erforderlich, abkühlen gelassen, bevorzugt auf 80-110 °C, besonders bevorzugt auf 85-105 °C, und mit Wasser versetzt. Bevorzugt wird entsalztes Wasser in Schritt b) eingesetzt.

Bevorzugt beträgt die Temperatur des in Schritt b) zugesetzten Wassers 70-95 °C, besonders bevorzugt 80-90 °C.

### Schritt c)

Zur Versalzung zumindest eines Teils der Carboxylgruppen des nach Schritt b) erhaltenen Reaktionsgemisches kommen für den Fachmann gängige Basen in Betracht.

Bevorzugt erfolgt die Versalzung zumindest eines Teils der Carboxylgruppen des nach Schritt b) erhaltenen Reaktionsgemisches mit einer wässrigen Lösung von mindestens einer der Basen ausgewählt aus der Gruppe bestehend aus Natriumhydroxid, Kaliumhydroxid, Lithiumhydroxid, Soda, Ammoniak, Ethanolamin, Diethanolamin, Triethanolamin, N-Methylethanolamin, N,N-Dimethylethanolamin, Triethylamin und Octylamin sowie Gemischen davon.

Besonders bevorzugt erfolgt die Versalzung zumindest eines Teils der Carboxylgruppen des nach Schritt b) erhaltenen Reaktionsgemisches mit einer wässrigen Lösung von mindestens einer der Basen ausgewählt aus der Gruppe bestehend aus Natriumhydroxid und Ethanolamin.

Die in Schritt c) eingesetzte wässrige Lösung der Base ist bevorzugt 30-70%ig, besonders bevorzugt 40-60%ig, bezogen auf die Base.

Bezogen auf 1,0 Äquivalent an Carboxylgruppen des Polymerisats werden bevorzugt 0,5 bis 1,0 Äquivalente an Base eingesetzt. Die Stoffmenge der Carboxylgruppen des Polymerisats entspricht der Stoffmenge der Carboxylgruppen der mindestens einen ethylenisch ungesättigen Carbonsäure oder deren Derivate der Komponente i), eingesetzt in Schritt a).

Bevorzugt werden in Schritt c) 50 - 100% der Carboxylgruppen des nach Schritt b) erhaltenen Reaktionsgemisches versalzt.

Für die Versalzung in Schritt c) kann entweder das Reaktionsgemisch erhalten nach Schritt b) vorgelegt werden und die wässrige Lösung der Base zugegeben werden, oder die wässrige Lösung der Base wird vorgelegt und das Reaktionsgemisch erhalten nach Schritt b) wird zugegeben.

Bevorzugt wird das Reaktionsgemisch nach Vereinigen des nach Schritt b) erhaltenen Reaktionsgemisches mit der Base noch weiter gerührt, besonders bevorzugt bei 75-95 °C, ganz besonders bevorzugt bei 80-90 °C.

Nach Versalzung zumindest eines Teils der Carboxylgruppen des nach Schritt b) erhaltenen Reaktionsgemisches kann das erhaltene Reaktionsgemisch durch kurzes Anlegen von Vakuum entgast werden.

Des Weiteren kann nach Versalzung zumindest eines Teils der Carboxylgruppen des nach Schritt b) erhaltenen Reaktionsgemisches durch Zugabe von Wasser der Feststoffgehalt des erhaltenen Reaktionsgemisches eingestellt werden.

Bevorzugt wird der Feststoffgehalt des erhaltenen Reaktionsgemisches auf 15-45 Gew.-% eingestellt, besonders bevorzugt auf 18-42 Gew.-%, bezogen auf das Gesamtgewicht des nach Schritt c) erhaltenen Reaktionsgemisches.

### Schritt d)

Das nach Schritt c) erhaltene Reaktionsgemisch stellt in der Regel eine Dispersion dar, welche üblicherweise eine mittlere Teilchengröße der Dispersion von 1 bis 100 µm aufweist, bevorzugt von 1 und 20 µm.

Die mittlere Teilchengröße der Dispersion bezieht sich auf die Größe der dispergierend wirkenden Teilchen aus Copolymeren und Öl.

Erst durch Scherung des nach Schritt c) erhaltenen Reaktionsgemisches auf eine mittlere Teilchengröße der Dispersion von 0,05 bis 10 µm wird das nach Schritt c) erhaltene Reaktionsgemisch als hydrophobierendes Lederbehandlungsmittel verwendbar.

Dem Fachmann sind gängige Methoden sowie verschiedene Gerätetypen zur Scherung bekannt.

Bevorzugt wird das nach Schritt c) erhaltene Reaktionsgemisch in Schritt d) hohen Scherkräften ausgesetzt.

Zu den möglichen verwendbaren Apparaten gehören Dissolver, Rotor - Stator - Systeme, Systeme nach dem Prallzerkleinerungsprinzip, Ultraschallzerkleinerung mittels Sonotrode und Hochdruckhomogenisatoren. Die Prozesse können batchweise oder kontinuierlich durchgeführt werden.

Die durch die genannten Apparate erreichbaren Teilchengrößenverteilungen sind unterschiedlich, können aber durch mehrmaliges oder länger andauerndes Anwenden zu kleineren Teilchengrößen hin verschoben werden.

Weiter ist es möglich, dem nach Schritt c) erhaltenen Reaktionsgemisch vor der Scherung Öl zuzufügen.

In Bezug auf das Öl gelten die unter Schritt a) aufgeführten bevorzugten Öle entsprechend.

Der Feststoffgehalt des nach Schritt d) erhaltenen Reaktionsgemisches beträgt bevorzugt 15-45 Gew.-%, besonders bevorzugt 18-42 Gew.-%, bezogen auf das Gesamtgewicht des nach Schritt d) erhaltenen Reaktionsgemisches.

Der Feststoffgehalt entspricht der Gesamttrockenmenge des nach Schritt d) erhaltenen Reaktionsgemisches und damit im Rahmen der vorliegenden Erfindung der Gesamtmenge der in Schritt a) bis d) eingesetzten Komponenten mit der Ausnahme von Wasser.

In Schritt d) erfolgt die Scherung des nach Schritt c) erhaltenen Reaktionsgemisches bevorzugt auf eine mittlere Teilchengröße der Dispersion von 0,1 - 8 µm.

Die mittlere Teilchengröße der Dispersion wird mittels dynamischer Lichtstreuung gemessen. Das Verfahren ist dem Fachmann bekannt. Dabei wird eine Probe der Dispersion mit Laserlicht durchstrahlt. Die dabei erfolgende Beugung, Interferenz, Brechung, Absorption und Reflexion ergibt ein Streumuster, welches charakteristisch für die jeweilige Teilchengrößenverteilung ist. Daraus kann dann unter Annahme der Kugelgestalt der Teilchen die Teilchengrößenverteilung errechnet werden. Bevorzugt wird die mittlere Teilchengröße der Dispersion gemäß ISO/CD 13320 gemessen.

Das Molekulargewicht (Mw) des in dem hydrophobierenden Lederbehandlungsmittel enthaltenen Copolymeren beträgt 10000 bis 60000, bevorzugt 20000 bis 60000.

### Mengen der in den Schritten a)-d) eingesetzten Komponenten:

Die in Schritt a)-d) eingesetzten Komponenten können in beliebigen Mengen eingesetzt werden.

Bevorzugte Mengen der in Schritt a)-d) eingesetzten Komponenten zur erfindungsgemäßen Herstellung des hydrophobierenden Lederbehandlungsmittels, bezogen auf die Gesamttrockenmenge des nach Schritt d) erhaltenen Reaktionsgemisches, sind folgende:
- mindestens eine ethylenisch ungesättigte Carbonsäure oder deren Derivate der Komponente i):
   3,0 bis 25,0 Gew-%, besonders bevorzugt 5,0 bis 20,0 Gew-%, ganz besonders bevorzugt 5,0 bis 10,0 Gew-%,
- mindestens ein (Meth)acrylat eines primären, gesättigten C₈- bis C₂₂-Alkohols der Komponente ii):
   8,0 bis 20,0 Gew-%, besonders bevorzugt 10,0 bis 20,0 Gew-%, ganz besonders bevorzugt 10,0 bis 15,0 Gew-%,
- mindestens ein Aktivator:
   0,12 bis 5 Gew-%, besonders bevorzugt 0,35 bis 2,0 Gew-%, ganz besonders bevorzugt 0,42 bis 1,0 Gew-%,
- mindestens ein Kettenübertragungsmittel:
   0,02 bis 2,0 Gew.-%, besonders bevorzugt 0,05 bis 1,2 Gew-%, ganz besonders bevorzugt 0,08 bis 1,0 Gew-%,
- mindestens eine Base:
   1,8 bis 7,0 Gew.-%, besonders bevorzugt 2,1 bis 6,0 Gew-%, ganz besonders bevorzugt 3,0 bis 4,5 Gew-%,
- Öl:
   50,0 bis 87,0 Gew-%, besonders bevorzugt 60,0 bis 82,5 Gew-%, ganz besonders bevorzugt 63,0 bis 81,5 Gew-%, und
- sonstige Zusatzstoffe:
   0,0 bis 8,0 Gew.-%, besonders bevorzugt 0,0 bis 5,0 Gew-%, ganz besonders bevorzugt 0,0 bis 2,0 Gew-%.

Wie bereits unter Schritt d) erwähnt, wird unter Gesamttrockenmenge des nach Schritt d) erhaltenen Reaktionsgemisches im Rahmen der vorliegenden Erfindung die Gesamtmenge der in Schritt a) bis d) eingesetzten Komponenten verstanden mit der Ausnahme von Wasser.

Lediglich zur Klarstellung sei erwähnt, dass der Fachmann die Mengen der in Schritt a)-d) eingesetzten Komponenten zur Herstellung des hydrophobierenden Lederbehandlungsmittels in der Weise wählt, dass sich diese zu 100 Gew.-%, bezogen auf die Gesamttrockenmenge des nach Schritt d) erhaltenen Reaktionsgemisches, addieren.

Das Gewichtsverhältnis der mindestens einen ethylenisch ungesättigten Carbonsäure oder deren Derivate der Komponente i) zu dem mindestens einen (Meth)acrylat eines primären, gesättigten C₈- bis C₂₂-Alkohols der Komponente ii) beträgt im Allgemeinen 1:10 - 10:1, bevorzugt 1:7 - 4:1, besonders bevorzugt 1:4-2:1, ganz besonders bevorzugt 1:3 - 1:1.

Bevorzugt beträgt das Gewichtsverhältnis der Wassermenge zu der Gesamttrockenmenge der in Schritt a)-d) eingesetzten Komponenten zur erfindungsgemäßen Herstellung des hydrophobierenden Lederbehandlungsmittels 85 : 15 bis 55 : 45 , bevorzugt 82 : 18 bis 58 : 42.

### Sonstige Zusatzstoffe:

In dem erfindungsgemäßen Verfahren können weitere sonstige Zusatzstoffe zugegen sein oder nicht zugegen sein.

Bevorzugt sind die sonstigen Zusatzstoffe von den Komponenten i), ii), dem Aktivator, dem Kettenübertragungsmittel, der Base, dem Öl und dem Wasser verschieden.

Besonders bevorzugt sind die sonstigen Zusatzstoffe ausgewählt aus der Gruppe bestehend aus organischen Lösungsmitteln, Emulgatoren, Konservierungsmitteln sowie mindestens einem weiteren Comonomer der Komponente iii), welches in Schritt a) eingesetzt wird.

Als Konservierungsmittel wird bevorzugt eine Zusammensetzung enthaltend 2-Methyl-2H-isothiazolin-3-on (MIT) und 1,2-Benzisothiazolin-3-on (BIT) eingesetzt.

Bevorzugt sind sonstige Zusatzstoffe in dem erfindungsgemäßen Verfahren zu 0,0 bis 8,0 Gew.-%, besonders bevorzugt zu 0,0 bis 5,0 Gew-%, ganz besonders bevorzugt zu 0,0 bis 2,0 Gew-% zugegen, bezogen auf die Gesamttrockenmenge des nach Schritt d) erhaltenen Reaktionsgemisches.

Bevorzugt werden in dem erfindungsgemäßen Verfahren zur Herstellung hydrophobierender Lederbehandlungsmittel weniger als 2 Gew.-%, besonders bevorzugt weniger als 1 Gew.-%, ganz besonders bevorzugt weniger als 0,5 Gew.-% eines organischen Lösungsmittels eingesetzt, bezogen auf die Gesamttrockenmenge des nach Schritt d) erhaltenen Reaktionsgemisches.

Unter dem Begriff "organisches Lösungsmittel" wird im Rahmen der vorliegenden Erfindung ein organischer und bei 20 °C flüssiger Stoff verstanden, in dem sich zumindest eine der in Schritt a) eingesetzten Komponenten i) und ii) bei 20 °C zu wenigstens 0,1 mol/L, bevorzugt zu wenigstens 0,5 mol/L, besonders bevorzugt zu wenigstens 1 mol/L, löst. Bevorzugt kommt es dabei nicht zu einer chemischen Reaktion zwischen dem lösenden Stoff und der zu lösenden Komponente bzw. den zu lösenden Komponenten.

Besonders bevorzugt ist das organische Lösungsmittel ausgewählt aus der Gruppe bestehend aus Alkoholen, Glykolen, Glykolethern, Glykolestern, Diolen und Ketonen, ganz besonders bevorzugt bestehend aus Glykolen, Glykolethern und Glykolestern.

Unter dem Begriff "organisches Lösungsmittel" werden im Rahmen der vorliegenden Erfindung nicht organische Komponenten verstanden, die mit den in Schritt a)-d) eingesetzten Komponenten reagieren und folglich nicht mehr im Endprodukt enthalten sind. Bevorzugt werden unter dem Begriff "organische Lösungsmittel" nicht die Kettenübertragungsmittel, die gegebenenfalls in Schritt a) eingesetzt werden, verstanden.

Ganz ganz besonders bevorzugt werden in dem erfindungsgemäßen Verfahren zur Herstellung hydrophobierender Lederbehandlungsmittel im Wesentlichen keine organischen Lösungsmittel eingesetzt.

Unter "im Wesentlichen keine organischen Lösungsmittel" wird im Rahmen der vorliegenden Anmeldung ein Einsatz von weniger als 0,1 Gew.-% eines organischen Lösungsmittels in dem erfindungsgemäßen Verfahren verstanden, bezogen auf die Gesamttrockenmenge des nach Schritt d) erhaltenen Reaktionsgemisches.

Bevorzugt werden in dem erfindungsgemäßen Verfahren zur Herstellung hydrophobierender Lederbehandlungsmittel weniger als 2 Gew.-%, besonders bevorzugt weniger als 1 Gew.-%, ganz besonders bevorzugt weniger als 0,5 Gew.-% eines Emulgators eingesetzt, bezogen auf die Gesamttrockenmenge des nach Schritt d) erhaltenen Reaktionsgemisches.

Unter "Emulgator" werden im Rahmen der vorliegenden Anmeldung alle oberflächenaktiven, nichtionischen, kationischen oder anionischen Substanzen verstanden, die das Reaktionsgemisch erhalten nach Schritt d) stabilisieren können.

Ganz ganz besonders bevorzugt werden in dem erfindungsgemäßen Verfahren zur Herstellung hydrophobierender Lederbehandlungsmittel im Wesentlichen keine Emulgatoren eingesetzt.

Unter "im Wesentlichen keine Emulgatoren" wird im Rahmen der vorliegenden Anmeldung ein Einsatz von weniger als 0,1 Gew.-% eines Emulgators in dem erfindungsgemäßen Verfahren verstanden, bezogen auf die Gesamttrockenmenge des nach Schritt d) erhaltenen Reaktionsgemisches.

Das mindestens eine weitere Comonomer der Komponente iii) ist bevorzugt ausgewählt aus der Gruppe bestehend aus C₁-C₇-Ester ethylenisch ungesättigter Carbonsäuren, besonders bevorzugt ausgewählt aus der Gruppe bestehend aus Methylacrylat, Ethylacrylat, Propylacrylat, Butylacrylat, Methylmethacrylat, Ethylmethacrylat, Propylmethacrylat und Butylmethacrylat, Amide und Nitrile ethylenisch ungesättigter Carbonsäuren, bevorzugt Acrylamid, Methacrylamid, Acrylnitril und Methacrylnitril, und Styrol, alpha-Methylstyrol, Isobutylen , Diisobutylen, Vinylacetat und Vinylpropionat.

Weiterer Gegenstand der vorliegenden Erfindung ist das nach dem erfindungsgemäßen Verfahren erhaltene hydrophobierende Lederbehandlungsmittel.

### Wässrige Dispersion

Die Erfindung betrifft weiter eine wässrige Dispersion enthaltend
- mindestens ein Copolymer, erhältlich durch radikalisch initiierte Copolymerisation von mindestens einer ethylenisch ungesättigten Carbonsäure oder deren Derivate der Komponente i) mit mindestens einem (Meth)acrylat eines primären, gesättigten C₈- bis C₂₂-Alkohols der Komponente ii), und
- mindestens ein Öl,
wobei die mittlere Teilchengröße der Dispersion 0,05 - 10 µm, bevorzugt 0,1 - 8 µm, beträgt.

Die mittlere Teilchengröße der Dispersion bezieht sich auf die Größe der dispergierend wirkenden Teilchen aus Copolymeren und Öl. Für die Scherung sowie die Messung der mittleren Teilchengröße der Dispersion gelten die unter Schritt d) angegebenen Ausführungen analog.

Die wässrige Dispersion kann weiter mindestens einen Aktivator, mindestens eine Base, und/ oder sonstige Zusatzstoffe erhalten. Es gelten alle vorherigen Beschreibungen und Vorzugsbereiche für die Komponenten i), ii), das mindestens eine Öl, den mindestens einen Aktivator, die mindestens eine Base und die sonstigen Zusatzstoffe analog.

Die wässrige Dispersion enthält bevorzugt zu 40-80 Gew.-%, besonders bevorzugt zu 50-70 Gew.-% Wasser, bezogen auf die Gesamtmenge der wässrigen Dispersion.

Die wässrige Dispersion enthält bevorzugt zu 15-55 Gew.-%, besonders bevorzugt zu 25-45 Gew.-%, die Gesamttrockenmenge des mindestens einen Copolymers und des mindestens einen Öls, bezogen auf die Gesamtmenge der wässrigen Dispersion.

Die wässrige Dispersion kann weiter 0-5 Gew.-% weitere Inhaltsstoffe enthalten, bevorzugt ausgewählt aus der Gruppe bestehend aus mindestens einem Aktivator, mindestens einer Base sowie der sonstigen weiter oben definierten Zusatzstoffe.

Ein besonders bevorzugter sonstiger Zusatzstoff ist ein Konservierungsmittel, ganz besonders bevorzugt eine Zusammensetzung enthaltend 2-Methyl-2H-isothiazolin-3-on (MIT) und 1,2-Benzisothiazolin-3-on (BIT).

Besonders bevorzugt ist eine wässrige Dispersion enthaltend
- 5-10 Gew.-% mindestens eines Copolymers, erhältlich durch Copolymerisation von Acrylsäure mit Stearylmethacrylat,
- 20-30 Gew.-% Weißöl,
- 0,1-0,5 Gew.-% eines Konservierungsmittels, und
- 60-70 Gew.-% Wasser,
wobei die mittlere Teilchengröße der Dispersion 0,05 - 10 µm, bevorzugt 0,1 - 8 µm, beträgt, und wobei die Gew.-% bezogen sind auf die Gesamtmenge der wässrigen Dispersion.

### Verfahren zur Gerbung von Leder

Das nach dem erfindungsgemäßen Verfahren erhaltene hydrophobierende Lederbehandlungsmittel sowie die erfindungsgemäße wässrige Dispersion sind in Verfahren zur Gerbung von Leder einsetzbar.

Weiterer Gegenstand der vorliegenden Erfindung sind Verfahren zur Gerbung von Leder, in denen das nach dem erfindungsgemäßen Verfahren erhaltene hydrophobierende Lederbehandlungsmittel oder die erfindungsgemäße wässrige Dispersion eingesetzt wird.

Bevorzugt sind die nach dem erfindungsgemäßen Verfahren erhaltenen hydrophobierenden Lederbehandlungsmittel in Verfahren zur Gerbung von Leder ohne weitere nach Schritt d) folgende Umsetzungen, wie beispielsweise Verfahren zur Entfernung von organischen Lösungsmitteln wie Destillationen, einsetzbar.

In dem Verfahren zur Gerbung von Leder werden vorzugsweise entwässerte, insbesondere gesalzene tierische Häute (als Rohware) eingesetzt.

Diese werden üblicherweise zunächst in einer dem Fachmann bekannten Art und Weise durch eine Reihe von Behandlungsschritten in der Wasserwerkstatt auf die eigentliche Gerbung vorbereitet.

### Wasserwerkstatt:

I. Weiche in Wasser unter Verwendung von Weichhilfsmitteln oder Waschmitteln.
II. Entfleischung, gegebenenfalls Spalten der Rohhäute.
III. Wäsche in Wasser in Gegenwart von Waschmitteln, gegebenenfalls auch Aufhellern.
IV. Gegebenenfalls Pickel zum Hautaufschluß mit Wasser, Kochsalz und Säuren, meist unter Verwendung zusätzlicher Hilfsmittel wie Bleichmittel und/oder Waschmittel.

### Gerbung:

V. Gerbung mit anorganischen und/oder organischen, natürlichen und/oder synthetischen Gerbstoffen wie beispielsweise Chromsalzen oder Synthanen, Harzgerbstoffen, polymeren Gerbstoffen oder vegetabilen Gerbstoffen.
   - Als anorganische Gerbstoffe werden im wesentlichen Chrom- III -salze, aber auch Aluminium-, Zirkonium- und Eisensalze verwendet.
   - Unter synthetischen Gerbstoffen werden beispielsweise eingesetzt: Kondensationsprodukte von sulfonierten Aromaten mit Aldehyden und/oder Ketonen und gegebenfalls zusätzlich noch mit Harnstoff bzw. seine Derivate und ggf. nicht sulfonierten Aromaten. Sulfonierte Aromaten sind beispielsweise: Naphthalinsulfonsäure, Phenolsulfonsäure, Sulfonierungsprodukte des Ditolylethers, des Diphenyls, des Terphenyls sowie 4,4'-Dihydroxydiphenylsulfon und Benzol- sowie Toluolsulfonsäure. Unter Aldehyden und/oder Ketonen sind aliphatische, cycloaliphatische und aromatische Typen zu verstehen, bevorzugt sind aliphatische, besonders bevorzugt ist Formaldehyd sowie seine niedermolekularen Analoga. Die nicht sulfonierten Aromaten sind Phenol, Ditolylether, Dihydroxytolylether, Dihydroxyditolylsulfon sowie Hydroxybezoesäure. Als Harnstoffderivate kommen Melamin, Dimethylolharnstoff und Guanidin in Frage.
   - Weitere synthetische Gerbstoffe sind beispielsweise Kondensationsprodukte aus Ditolylethersulfonsäure und 4,4'-Dihydroxydiphenylsulfon sowie Kondensationsprodukte von sulfoniertem Naphthalin und sulfoniertem Phenol oder 4,4'-Dihydroxy-diphenylsulfon mit Formaldehyd oder Cokondensate von sulfoniertem Ditolylether, sulfoniertem Phenol, Harnstoff und Phenol mit Formaldehyd.
   - Harzgerbstoffe sind vorzugsweise Polykondensationsprodukte von Melamin, Dicyandiamid, Harnstoff, Ligninsulfonat mit Formaldehyd oder Glutardialdehyd.
   - Vegetabile Gerbstoffe sind pflanzlicher Herkunft wie beispielsweise Kastanienextrakt, Mimosa, Tara und Quebracho. Andere vegetabile Gerbstoffe werden aus Pflanzen bzw. Pflanzenteilen wie Früchten, beispielsweise Oliven, oder Rhabarber, oder Blättern, Rinden, Wurzeln, Hölzern durch Extraktion oder durch chemische bzw. enzymatische Modifizierungsprozesse erhalten.

### Nachgerbung:

VI. Weiterverarbeitung mit organischen Nachgerbstoffen, Fettungsmitteln, gegebenenfalls auch Färbung sowie Hydrophobierung.
VII. Trocknung sowie Fertigstellung des Leders: Abtropfen lassen, Hängetrocknung, Konditionierung, Stollen und ggf. Schleifen der Oberfläche.

In der Nachgerbung, im Verfahrensschritt VI., wird üblicherweise auch die Hydrophobierung mit dem nach dem erfindungsgemäßen Verfahren erhaltenen hydrophobierenden Lederbehandlungsmittel oder der erfindungsgemäßen wässrigen Dispersion durchgeführt.

Eine weitere Möglichkeit besteht in der Verwendung von Wet blue (Leder nach der Chromgerbung) als Ausgangsbasis für den oben beschriebenen Prozeß.

Eine detaillierte Beschreibung der erforderlichen Arbeitsschritte ist in den Beispielen zu finden.

Besonders erstrebenswerte Eigenschaften des behandelten Leders sind die Gleichmäßigkeit der behandelten Leder in Bezug auf Fülle, Weichheit, Festigkeit und Elastizität, die Färbung ohne Flecken sowie die Abwesenheit eines unangenehmen Griffs, von Losnarbigkeit und sonstigen unerwünschten Eigenschaften. Darüber hinaus sollte weder die Färb- und Zurichtbarkeit des hergestellten Leders noch das Aussehen des Leders beeinträchtigt werden.

Oft wird die Nachgerbung als solche gleichzeitig mit der Färbung und der FettlickerBehandlung in einem Schritt durchgeführt.

Durch die Behandlung mit dem nach dem erfindungsgemäßen Verfahren erhaltenen hydrophobierenden Lederbehandlungsmittel können Nachgerbung, gegebenenfalls auch Fettlickerbehandlung und Färbung in einem Faß und in einem Arbeitsgang durchgeführt werden.

Die Einsatzmengen des nach dem erfindungsgemäßen Verfahren erhaltenen hydrophobierenden Lederbehandlungsmittels oder der erfindungsgemäßen wässrigen Dispersion in dem Verfahren zur Gerbung des Leders betragen zwischen 2 und 15 Gew.-%, bevorzugt 3 bis 10 Gew.-%, bezogen auf das Falzgewicht.

In dem Verfahren zur Gerbung von Leder können neben dem nach dem erfindungsgemäßen Verfahren erhaltenen hydrophobierenden Lederbehandlungsmittel oder der erfindungsgemäßen wässrigen Dispersion bevorzugt auch Hydrophobiermittel auf Basis von Polysiloxanen eingesetzt werden.

Geeignete Hydrophobiermittel auf Basis von Polysiloxanen sind an sich bekannt. Bevorzugte Hydrophobiermittel auf Basis von Polysiloxanen sind carboxylgruppenhaltige Polysiloxane, welche mittels Alkali in wäßrige Dispersionen überführt werden können.

Besonders bevorzugt sind die Polysiloxane gemäß WO 2011/147959, welche 1,3-Dihydroxyalkyl-Struktureinheiten enthalten und sich zu wässrigen Zubereitungen verarbeiten lassen.

Die Einsatzmengen des Hydrophobiermittels auf Basis von Polysiloxanen in dem Verfahren zur Gerbung des Leders betragen zwischen 2 und 15 Gew.-%, bevorzugt 3 bis 10 Gew.-%, besonders bevorzugt 3 bis 6 Gew.-%, bezogen auf das Falzgewicht.

Bevorzugt werden die Hydrophobiermittel auf Basis von Polysiloxanen in Form wäßriger Emulsionen oder Dispersionen, besonders bevorzugt als Mikro- oder Makroemulsionen eingesetzt.

Die Polysiloxane sind mit dem nach Schritt d) erhaltenen hydrophobierenden Lederbehandlungsmittel in gleicher Flotte gleichzeitig oder nacheinander einsetzbar. Das hat den Vorteil, dass das Mengenverhältnis der beiden hydrophobierenden Komponenten zueinander den unterschiedlichsten Anforderungen an die Hydrophobierung angepaßt werden kann.

Dies ist ein großer Vorteil, denn im Gegensatz zu dem zuvor beschriebenen frei wählbaren Mischungsverhältnis lässt sich mit einkomponentigen hydrophobierenden Lederbehandlungsmitteln nur ein einziges starres Mischungsverhältnis realisieren.

Weiterer Gegenstand der Erfindung sind Leder, erhalten nach Verfahren zur Gerbung von Leder, in denen das nach dem erfindungsgemäßen Verfahren erhaltene hydrophobierende Lederbehandlungsmittel oder die erfindungsgemäße wässrige Dispersion eingesetzt wird.

Bevorzugt weisen die erhaltenen Leder einen MAESER-Wert von größer als 15.000, besonders bevorzugt von größer als 30.000, ganz besonders bevorzugt von größer als 50.000, und/ oder eine statistische Wasseraufnahme von weniger als 35%, besonders bevorzugt von weniger als 30%, gemessen nach ASTM D-2099-70, auf.

### Beispiele:

### I) Erfindungsgemäßes Verfahren zur Herstellung hydrophobierender Lederbehandlungsmittel

### Beispiel 1

130 g Weißöl 285 (Fa. Parafluid) werden bei 140 °C unter Stickstoffatmosphäre vorgelegt. Die Monomeren werden als Mischung von 130 g Stearylmethacrylat 1618 F (Fa. BASF SE), 70 g Acrylsäure, 98 % ig, ( Fa. Acros) und 1,2 g Ölsäure (Fa. Aldrich) zubereitet, eine Lösung von 6 g Ditertiärbutylperoxid (Fa. Merck) in 20 g Weißöl 285 (Fa. Parafluid) dient als Initiatorlösung.

Zum sicheren Start der Reaktion werden zum vorgelegten Weißöl 10 g der Monomermischung zugesetzt und nach homogenem Vermischen dann der Rest der o.g. Monomermischung gleichzeitig mit der o.g. Initiatorlösung über 2 Stunden unter Rühren zudosiert. Nach der Zugabe wird noch zwei Stunden bei 140 °C gerührt.

Nach zwei Stunden wird auf 100 °C abkühlen gelassen und 1440,7 g entsalztes Wasser zugegeben. Nach der Wasserzugabe werden 77,8 g Natronlauge 50 %ig, verdünnt mit 100 g entsalztem Wasser zugesetzt.

Nach einer Stunde Rühren bei 80 bis 90 °C wird durch Anlegen von Vakuum entgast und durch Zugabe von 600 g Wasser der Feststoffgehalt auf 20 % eingestellt.

200 g der erhaltenen Dispersion werden mit 50 g Weißöl 285 (Fa. Parafluid) versetzt und mit dem Ultra-Turrax, Typ: T 25 B, Fa. IKA, für 10 min bei 300 Touren behandelt. Die mittlere Teilchengröße der Dispersion wird durch dynamische Lichtstreuung mit 1,397 µm gemessen (Typ LS 230, Hersteller: Fa. Beckman Coulter).

### Beispiel 2

130 g Weißöl 285 (Fa. Parafluid) werden bei 140 °C unter Stickstoffatmosphäre vorgelegt. Die Monomeren werden als Mischung von 130 g Stearylmethacrylat 1618 F (Fa. BASF SE), 70 g Acrylsäure, 98 % ig ( Fa. Acros) und 1,2 g Ölsäure (Fa. Aldrich) zubereitet, eine Lösung von 6 g Ditertiärbutylperoxid (Fa. Merck) in 20 g Weißöl 285 (Fa. Parafluid) dient als Initiatorlösung.

Zum sicheren Start der Reaktion werden zum vorgelegten Weißöl 10 g der Monomerlösung zugesetzt und nach homogenem Mischen dann der Rest der o.g. Monomermischung gleichzeitig mit der o.g. Initiatorlösung über 2 Stunden unter Rühren zudosiert.

Nach der Zugabe wird noch zwei Stunden gerührt. Nach der ersten Stunde werden 546 g Weißöl 285 (Fa. Parafluid) zugegeben.

Nach den zwei Stunden wird auf 100°C abkühlen gelassen und 1274,3 g entsalztes Wasser, vorgewärmt auf 80 bis 90°C, zugegeben und homogen untergerührt. Nach Wasserzugabe werden 77,8 g Natronlauge 50 %ig, verdünnt mit 100 g entsalztem Wasser zugesetzt.

Nach einer Stunde Rühren bei 80 bis 90 °C wird durch Vakuum anlegen entgast der Feststoffgehalt auf 40 % eingestellt.

Zur Scherung wird die erhaltene Dispersion mit einem Ultra- Turrax , Typ: T 25 B, Fa. IKA, für 10 Minuten bei höchster Stufe nachbehandelt.

Die mittlere Teilchengröße der Dispersion wird mit 1,687 µm gemessen (Messmethode und Gerät entsprechend Beispiel 1).

### Beispiel 3

263,6 g Weißöl 285 (Fa. Parafluid) werden bei 140°C unter Stickstoffatmosphäre vorgelegt.

Die Monomeren werden als Mischung von 47,2 g Stearylmethacrylat 1618 F (Fa. BASF SE), 25,5 g Acrylsäure, 98 % ig ( Fa. Acros) und 3,5 g 1-Butanol (Fa. Alfa-Aesar) zubereitet, eine Lösung von 2,1 g Ditertiärbutylperoxid (Fa. Merck) in 20 g Weißöl 285 (Fa. Parafluid) dient als Initiatorlösung.

Zum sicheren Start der Reaktion werden zum vorgelegten Weißöl 9,8 g der Monomermischung zugesetzt und nach homogenem Untermischen dann der Rest der o.g. Monomermischung gleichzeitig mit der o.g. Initiatorlösung über 2 Stunden unter Rühren zudosiert. Nach der Zugabe wird noch zwei Stunden bei gleicher Temperatur gerührt.

Nach den zwei Stunden wird auf 100°C abkühlen gelassen und 560,0 g entsalztes Wasser, vorgewärmt auf 80 bis 90°C, zugegeben und homogen untergerührt. Nach Wasserzugabe werden 28,2 g Natronlauge 50 % ig, verdünnt mit 50 g entsalztem Wasser zugesetzt.

Nach einer Stunde Rühren bei 80 bis 90 °C wird durch Vakuum anlegen entgast und durch Zugabe von 44,3 g Wasser der Feststoffgehalt auf 36 % eingestellt.

Die aus Viskositätsgründen auf 20 % Feststoffgehalt verdünnte Dispersion wird mit dem Micro Fuidizer des Herstellers Micro Fluidics zwei Mal bei 1100 bar behandelt. Die mittlere Teilchengröße der Dispersion wird mit 0,133 µm gemessen (Messmethode und Gerät entsprechend Beispiel 1).

### Beispiel 4

130 g Weißöl 285 (Fa. Parafluid) werden bei 140 °C unter Stickstoffatmosphäre vorgelegt.

Die Monomeren werden als Mischung von 130 g Stearylmethacrylat 1618 F (Fa. BASF SE), 70 g Acrylsäure, 98 % ig ( Fa. Acros) und 1,2 g Ölsäure (Fa. Aldrich) zubereitet, eine Lösung von 6 g Ditertiärbutylperoxid (Fa. Merck) in 20 g Weißöl 285 (Fa. Parafluid) dient als Initiatorlösung.

Zum sicheren Start der Reaktion werden zum vorgelegten Weißöl 10 g der Monomerlösung zugesetzt und nach homogenem Vermischen dann der Rest der o.g. Monomermischung gleichzeitig mit der o.g. Initiatorlösung über 2 Stunden unter Rühren zudosiert.

Nach der Zugabe wird noch zwei Stunden gerührt. Nach einer Stunde werden 546 g Weißöl 285 (Fa. Parafluid) zugegeben.

Nach zwei Stunden wird auf 90°C abkühlen gelassen und die klare Lösung abgefüllt.

In einem Becherglas werden in 230,4 g Wasser vorgelegt und 13,2 g 50 % ige Natronlauge zugegeben. Diese Mischung wird mit einer Dissolverscheibe vom Durchmesser 70 mm bei geringen Tourenzahlen gerührt. Dann wird in dünnem Strahl 150,8 g des gemäß Beispiel 5 hergestellten in Weißöl gelösten Polymeren zulaufen gelassen und die Tourenzahl vorsichtig bis auf 3000 U/min. gesteigert.

Die so erhaltene Dispersion (Feststoffgehalt: 39,9 %) wird dann mittels eines Gaulin Hochdruckhomogenisators (Typ 15M 8TA) zweimal bei 200 bar und danach nochmals einmal bei 500 bar nachbehandelt.

Die mittlere Teilchengröße der Dispersion wird mit 5,448 µm gemessen (Messmethode und Gerät entsprechend Beispiel 1).

### Beispiel 5

130 g Weißöl 285 (Fa. Parafluid) werden bei 140 °C unter Stickstoffatmosphäre vorgelegt.

Die Monomeren werden als Mischung von 130 g Stearylmethacrylat 1618 F (Fa. BASF SE), 70 g Acrylsäure, 98 % ig ( Fa. Acros) und 1,2 g Ölsäure (Fa. Aldrich) zubereitet, eine Lösung von 6 g Ditertiärbutylperoxid (Fa. Merck) in 20 g Weißöl 285 (Fa. Parafluid) dient als Initiatorlösung.

Zum sicheren Start der Reaktion werden zum vorgelegten Weißöl 10 g der Monomerlösung zugesetzt und nach homogenem Vermischen dann der Rest der o.g. Monomermischung gleichzeitig mit der o.g. Initiatorlösung über 2 Stunden unter Rühren zudosiert.

Nach der Zugabe wird noch zwei Stunden gerührt. Nach einer Stunde werden 546 g Weißöl 285 (Fa. Parafluid) zugegeben.

Nach zwei Stunden wird auf 90°C abkühlen gelassen. Danach werden 2059,3 g entsalztes Wasser unter Rühren zugegeben und homogen gerührt. Dann werden 77,8 g 50% ige Natronlauge, gelöst in 100 g Wasser zulaufen gelassen und das Reaktionsgemisch noch eine Stunde bei 80 bis 90 °C gerührt, dann im Vakuum kurz entgast.

Die vorliegende 30 %ige Dispersion wird mit einer Dissolverscheibe vom Durchmesser 70 mm bei 4000 Umdrehungen /Min. für 5 Minuten behandelt. Die mittlere Teilchengröße der Dispersion wird mit 3,102 µm gemessen (Messmethode und Gerät entsprechend Beispiel 1).

### Beispiel 6

180 g Weißöl 285 (Fa. Parafluid) werden in einem Dreihalskolben mit Rührer bei 140 °C unter Stickstoffatmosphäre vorgelegt.

Die Monomeren werden als Mischung von 70 g Stearylmethacrylat 1618 F (Fa. BASF SE), 130 g Acrylsäure, 98 % ig ( Fa. Acros) und 3,6 g Ölsäure (Fa. Aldrich) zubereitet, eine Lösung von 6 g Ditertiärbutylperoxid (Fa. Merck) in 20 g Weißöl 285 (Fa. Parafluid) dient als Initiatorlösung.

Zum sicheren Start der Reaktion werden zum vorgelegten Weißöl 10 g der Monomerlösung zugesetzt und nach homogenem Vermischen dann der Rest der o.g. Monomermischung gleichzeitig mit der o.g. Initiatorlösung über 2 Stunden zudosiert.

Nach starker Viskositätserhöhung werden noch 250 g Weißöl zugesetzt. Nach der Zugabe wird noch zwei Stunden bei 140°C gerührt.

Nach zwei Stunden wird auf 90°C abkühlen gelassen. Danach werden 436,6 g entsalztes Wasser unter Rühren zugegeben und homogen gerührt. Dann werden 60 g 50% ige Natronlauge zulaufen gelassen und das Reaktionsgemisch noch eine Stunde bei 80 bis 90°C gerührt. Währenddessen werden insgesamt 1300 ml entsalztes Wasser zur Verringerung der Viskosität zugegeben. Danach wird im Vakuum kurz entgast.

Die vorliegende 26 %ige Dispersion wird mit einer Dissolverscheibe vom Durchmesser 70 mm bei 4000 Umdrehungen /Min. für 5 Minuten behandelt. Die mittlere Teilchengröße der Dispersion wird mit 2,756 µm gemessen (Messmethode und Gerät entsprechend Beispiel 1).

### II) Anwendungstechnische Beispiele

### Verfahren zur Gerbung von Leder unter Einsatz der nach den Beispielen 1-6 erhaltenen hydrophobierenden Lederbehandlungsmittel

Ausgangsstufe ist chromgegerbtes Rinds-Wet blue, enthaltend ca. 2,5 % Chrom(III)oxid, mit einer Falzstärke von 1,5 bis 2,0 mm; die Behandlung erfolgt in üblichen rotierenden Trommeln oder Fässern.

Dabei werden folgende Arbeitsschritte durchlaufen (die Angaben in % beziehen sich auf das Falzgewicht des Wet blue):
A. Saure Wäsche mit 200 % Wasser und 0,2 % Ameisensäure 85% ig. (Zeitbedarf: 15 Min.):
   - Soll-pH der Flotte am Ende: 3,3.
   - Flotte ablassen.
B. Nachgerbung , erste Stufe (Zeitbedarf insges.: 240 Min.)
   Zugabe 100 % Wasser und
   2 % eines lichtechten, Chrom und Synthan enthaltenden Nachgerbstoffes (Blancorol RC, LANXESS)
   2 % Chrom (III) sulfat, (Chromosal B, LANXESS)
   1,5 % eines lichtechten , anionischen Nachgerbmittels, (Tanigan PAK, LANXESS)
   1,0 % Natriumformiat,
   1,0 % Natriumhydrogencarbonat,
   3,0 % eines synthetischen Polykondensations-Austauschgerbstoffs (Tanigan F LANXESS),
   Soll-pH der Flotte am Ende: 5,0.
   Flotte ablassen.
C. Nachgerbung, Färbung (Zeitbedarf insges.: 240 Min.):
   Zugabe 50 % Wasser und
   4,0 % eines Acrylatcopolymer-basierenden Nachgerbmittels, (Leukotan 8090 LANXESS,)
   4,0 % Kastanienextrakt, gesüßt,
   4,0 % eines synthetischen Polykondensations-Austauschgerbstoffs, (Tanigan F, LANXESS)
   4,0 % eines anionischen Harzgerbstoffs, (Retingan R 7, LANXESS,)
   1,0 % eines synthetischen Polykondensationsgerbstoffes, (Tanigan PR, LANXESS)
   3,0 % eines Farbstoffs, (Baygenal Yellow Brown 3G, LANXESS)
   5,0 % eines hydrophobierenden Lederbehandlungsmittels gemäß einem der Beispiele 1-6
   4,0 % eines Hydrophobierungsmittel auf Basis Polysiloxan, (Levotan W, LANXESS)
D. Ansäuern (Zeitbedarf insges.: 60 Min.):
   Zugabe 100 % Wasser und
   1,1 % Ameisensäure 85 % ig sowie nach 30 Minuten
   1,1 % Ameisensäure 85 % ig.
   Soll-pH der Flotte am Ende: 3,4 bis 3,6.
   Flotte ablassen.
E. Spülen (Zeitbedarf insges.: 10 Min.):
   Zugabe 300 % Wasser.
   Flotte ablassen.
F. Fixierung (Zeitbedarf insges.: 90 Min.):
   Zugabe 300 % Wasser und
   2 % modifiziertes Chrom (III) sulfat (Chromosal BF, LANXESS) und nach 30 Minuten erneut
   2 % modifiziertes Chrom (III) sulfat.
   Soll-pH der Flotte am Ende: 3,3.
   Nach 60 Min. Flotte ablassen.
G. Spülen (Zeitbedarf insges.: 10 Min.):
   Zugabe 300 % Wasser.
   Flotte ablassen.
H. Spülen (Zeitbedarf insges.: 10 Min.):
   Zugabe 300 % Wasser.
   Flotte ablassen.
I. Spülen (Zeitbedarf insges.: 10 Min.):
   Zugabe 300 % Wasser.
   Flotte ablassen.
J. Fertigstellen:
   Nach Abtropfen lassen Leder auf dem Bock über Nacht ablegen, dann ausrecken, hängetrocknen, stollen.

Die erhaltenen Leder sind weich, festnarbig, zeigten eine glatte Narbenseite und haben einen angenehmen Griff. Ein Unterschied in der Farbtiefe zwischen Narben- und Fleischseite ist nicht feststellbar.

Zur Bestimmung der hydrophoben Eigenschaften, insbesondere der dynamischen Hydrophobierwirkung wurden die Leder im MAESER-Test (in Anlehnung an ASTM D 2099-70) geprüft. In diesem Test wird die Wasserdurchlässigkeit des mit dem hydrophobierenden Lederhandlungsmittel behandelten Leders unter permanenter Knickung des ausgestanzten Lederprüfkörpers geprüft. Dadurch wird die Beanspruchung eines zum Schuh oder Stiefel verarbeiteten Leders beim Gehen in nasser Umgebung (hohes nasses Gras, Pfützen, Schlamm) simuliert.

Ein MAESER-Wert von > größer als 15000 ist das Minimum-Kriterium des US Militärs für wasserdichtes Schuhleder. Die statische Wasseraufnahme von bis zu 30 % gilt als akzeptabel für den industriellen Standard.

Hierzu wurden aus jedem Leder 4 Prüfkörper ausgestanzt, zwei in der Längsrichtung und zwei quer dazu. Zudem wurde die statische Wasseraufnahme ermittelt.

**Tabelle 1:**

| Beispiel | Mittlere Teilchengröße | MAESER - Wert | MAESER-Werte | Wasseraufnahme |
|---|---|---|---|---|
| | µm | Durchschnitt | einzeln | statisch [%] |
| 1 | 1,397 | >50000 | 4x >50000 | 26,6 |
| 2 | 1,687 | 42175 | 39000,29700, 2x 50000 | 32,8 |
| 3 | 0,133 | >50000 | 4x >50000 | 24,7 |
| 4 | 5,448 | 32900 | 12800,22300,46500,>50000 | 32,1 |
| 5 | 3,102 | 39750 | 1x9000, 3x>50000 | 23,8 |
| 6 | 2,756 | 14495 | 11500,17400,13550,15530 | 42,7 |

## Patentansprüche

1. Verfahren zur Herstellung hydrophobierender Lederbehandlungsmittel, enthaltend die Schritte
a) radikalisch initiierte Copolymerisation
i) mindestens einer ethylenisch ungesättigten Carbonsäure oder deren Derivaten, und
ii) mindestens eines (Meth)acrylats eines primären, gesättigten C₈- bis C₂₂-Alkohols,
b) Mischen des nach Schritt a) erhaltenen Reaktionsgemisches mit Wasser,
c) Versalzung zumindest eines Teils der Carboxylgruppen des nach Schritt b) erhaltenen Reaktionsgemisches mit einer Base, und
d) Scherung des nach Schritt c) erhaltenen Reaktionsgemisches auf eine mittlere Teilchengröße von 0,05 - 10 µm,
wobei Schritt a) in Öl als Reaktionsmedium durchgeführt wird und wobei die Atmosphäre in Schritt a) weniger als 0,1 Vol.-% eines oxidierenden Gases enthält.

2. Verfahren gemäß Anspruch 1, **dadurch gekennzeichnet, dass** die mindestens eine ethylenisch ungesättigte Carbonsäure oder deren Derivate der Komponente i) ausgewählt ist aus der Gruppe bestehend aus Acrylsäure, Methacrylsäure, Itaconsäure, Fumarsäure und Maleinsäure sowie deren Derivaten, bevorzugt Anhydriden, besonders bevorzugt Maleinsäureanhydrid, und Alkali-Salzen, bevorzugt Natriumacrylat, und deren Gemischen.

3. Verfahren gemäß einem der Ansprüche 1 oder 2, **dadurch gekennzeichnet, dass** das mindestens eine (Meth)acrylat eines primären, gesättigten C₈- bis C₂₂-Alkohols der Komponente ii) ausgewählt ist aus der Gruppe bestehend aus Octylacrylat, Octylmethacrylat, 2-Ethylhexylacrylat, 2-Ethylhexylmethacrylat, Methacrylsäureester aus hydriertem Talgfettalkohol, Acrylsäureester aus hydriertem Talgfettalkohol, Stearylmethacrylat, Stearylacrylat, Hexadecylacrylat, Hexadecylmethacrylat, Dodecylacrylat, Dodecylmethacrylat, Eicosanylacrylat, Eicosanylmethacrylat, Docosanylmethacrylat und Docosanylacrylat und deren Gemischen, bevorzugt aus der Gruppe bestehend aus Hexadecylacrylat, Stearylmethacrylat und deren Gemischen.

4. Verfahren gemäß einem der Ansprüche 1-3, **dadurch gekennzeichnet, dass** die Copolymerisation initiiert wird von mindestens einem Aktivator ausgewählt aus der Gruppe bestehend aus Tertiärbutylhydroperoxid, Ditertiärbutylperoxid, Dibenzoylperoxid, Bernsteinsäureperoxid, Cumolhydroperoxid, Tertiärbutylperbenzoat, 2,2-Azobis(-2-methyl)butyronitril, 2,2-Azobisisobutyronitril und Gemischen davon, bevorzugt bestehend aus Ditertiärbutylperoxid, 2,2-Azobis(-2-methyl)butyronitril und Gemischen davon.

5. Verfahren gemäß einem der Ansprüche 1-4, **dadurch gekennzeichnet, dass** das in Schritt a) eingesetzte Öl ausgewählt ist aus der Gruppe bestehend aus synthetischen Ölen, natürlichen Ölen und Gemischen davon, bevorzugt aus synthetischen Ölen, besonders bevorzugt Weißöl.

6. Verfahren gemäß einem der Ansprüche 1-5, **dadurch gekennzeichnet, dass** in Schritt a) mindestens ein Kettenübertragungsmittel eingesetzt wird, bevorzugt ausgewählt aus der Gruppe bestehend aus Alkylmercaptanen, Thioglykolsäureestern, Phenolen, ungesättigten Verbindungen, bevorzugt Ölsäure, niederen Alkoholen, bevorzugt n-Butanol und tert- Butanol, und Aldehyden.

7. Verfahren gemäß einem der Ansprüche 1-6, **dadurch gekennzeichnet, dass** das Gewichtsverhältnis der mindestens einen ethylenisch ungesättigten Carbonsäure oder deren Derivaten der Komponente i) zu dem mindestens einen (Meth)acrylat eines primären, gesättigten C₈- bis C₂₂-Alkohols der Komponente ii) 1:10 - 10:1, bevorzugt 1:7 - 4:1, besonders bevorzugt 1:4 - 2:1, ganz besonders bevorzugt 1:3 - 1:1, beträgt.

8. Verfahren gemäß einem der Ansprüche 1-7, **dadurch gekennzeichnet, dass** in Schritt d) die Scherung auf eine mittlere Teilchengröße von 0,1 - 8 µm erfolgt.

9. Verfahren gemäß einem der Ansprüche 1-8, **dadurch gekennzeichnet, dass** sonstige Zusatzstoffe in dem Verfahren eingesetzt werden, ausgewählt aus der Gruppe bestehend aus organischen Lösungsmitteln, Emulgatoren, Konservierungsmitteln sowie mindestens einem weiteren Comonomer der Komponente iii), welches in Schritt a) eingesetzt wird.

10. Verfahren gemäß einem der Ansprüche 1-9, **dadurch gekennzeichnet, dass** die Mengen der in Schritt a)-d) des Verfahrens eingesetzten Komponenten, bezogen auf die Gesamttrockenmenge des nach Schritt d) erhaltenen Reaktionsgemisches, folgende sind:
- mindestens eine ethylenisch ungesättigte Carbonsäure oder deren Derivaten der Komponente i):
3,0 bis 25,0 Gew-%, bevorzugt 5,0 bis 20,0 Gew-%, besonders bevorzugt 5,0 bis 10,0 Gew-%,
- mindestens ein (Meth)acrylat eines primären, gesättigten C₈- bis C₂₂-Alkohols der Komponente ii):
8,0 bis 20,0 Gew-%, bevorzugt 10,0 bis 20,0 Gew-%, besonders bevorzugt 10,0 bis 15,0 Gew-%,
- mindestens ein Aktivator:
0,12 bis 5 Gew-%, bevorzugt 0,35 bis 2,0 Gew-%, besonders bevorzugt 0,42 bis 1,0 Gew-%,
- mindestens ein Kettenübertragungsmittel:
0,02 bis 2,0 Gew.-%, bevorzugt 0,05 bis 1,2 Gew-%, besonders bevorzugt 0,08 bis 1,0 Gew-%,
- mindestens eine Base:
1,8 bis 7,0 Gew.-%, bevorzugt 2,1 bis 6,0 Gew-%, besonders bevorzugt 3,0 bis 4,5 Gew-%,
- Öl:
50,0 bis 87,0 Gew-%, bevorzugt 60,0 bis 82,5 Gew-%, besonders bevorzugt 63,0 bis 81,5 Gew-%, und
- sonstige Zusatzstoffe:
0,0 bis 8,0 Gew.-%, bevorzugt 0,0 bis 5,0 Gew-%, besonders bevorzugt 0,0 bis 2,0 Gew-%.

11. Verfahren gemäß einem der Ansprüche 1-10, **dadurch gekennzeichnet, dass** in dem Verfahren weniger als 2 Gew.-%, bevorzugt weniger als 1 Gew.-%, besonders bevorzugt weniger als 0,5 Gew.-% eines organischen Lösungsmittels eingesetzt werden, bezogen auf die Gesamttrockenmenge des nach Schritt d) erhaltenen Reaktionsgemisches.

12. Verfahren gemäß einem der Ansprüche 1-11, **dadurch gekennzeichnet, dass** in dem Verfahren weniger als 2 Gew.-%, bevorzugt weniger als 1 Gew.-%, besonders bevorzugt weniger als 0,5 Gew.% eines Emulgators eingesetzt werden, bezogen auf die Gesamttrockenmenge des nach Schritt d) erhaltenen Reaktionsgemisches.

13. Hydrophobierendes Lederbehandlungsmittel, erhalten nach dem Verfahren gemäß einem der Ansprüche 1-12.

14. Wässrige Dispersion, enthaltend
- mindestens ein Copolymer, erhältlich durch radikalisch initiierte Copolymerisation von mindestens einer ethylenisch ungesättigten Carbonsäure oder deren Derivaten der Komponente i) mit mindestens einem (Meth)acrylat eines primären, gesättigten C₈- bis C₂₂-Alkohols der Komponente ii), und
- mindestens ein Öl,
wobei die mittlere Teilchengröße der Dispersion 0,05 - 10 µm, bevorzugt 0,1 - 8 µm, beträgt.

15. Verfahren zum Gerben von Leder unter Verwendung des hydrophobierenden Lederbehandlungsmittels gemäß Anspruch 13 oder der wässrigen Dispersion gemäß Anspruch 14.

16. Leder, erhalten nach dem Verfahren gemäß Anspruch 15.

17. Leder gemäß Anspruch 16, **dadurch gekennzeichnet, dass** sie einen MAESER-Wert von größer als 15.000, bevorzugt von größer als 30.000, besonders bevorzugt von größer als 50.000, und/ oder eine statistische Wasseraufnahme von weniger als 35%, bevorzugt von weniger als 30%, gemessen nach ASTM D-2099-70, aufweisen.
